# FASCICULE DE BREVET EUROPEEN

(11) **EP 2 309 429 B1**
(45) Date de publication et mention de la délivrance du brevet: **04.01.2012**
(21) Numéro de dépôt: 10186474.2
(22) Date de dépôt: 05.10.2010
(51) Int. Cl.: G06K 19/077, G06K 19/073, B42D 15/00, D21H 21/44, G07D 7/10

(54) **Système de sécurisation d'un document**
Sicherheitssystem für Dokumente
Security system for documents

(30) Priorité: 08.10.2009 FR 0957018
(43) Date de publication de la demande: 13.04.2011
(73) Titulaire: Oberthur Technologies, 92300 Levallois-Perret (FR)
(72) Inventeur: Le Garrec, Loïc, 35220 Chateaubourg (FR); Capitaine, Christophe, 35220 Chateaubourg (FR)
(74) Mandataire: Delumeau, François Guy

(56) Documents cités:
- EP-A1- 1 277 881
- WO-A1-2009/110382
- WO-A2-2008/047003
- US-A1- 2006 202 795

## Description

La présente invention concerne le domaine technique de la sécurisation des documents-valeurs.

Elle s'applique plus particulièrement mais non exclusivement à l'anti-falsification de documents valeurs, tels que par exemple des documents d'identité, notamment les passeports, cartes d'identité et permis de conduire, dits « électroniques » car comportant un dispositif de radio-identification de type RFID (de l'anglais « Radio Frequency IDentity »). Ce dispositif comprend généralement un microcircuit et une antenne de communication en champ proche reliée au microcircuit.

Un tel dispositif de radio-identification vient compléter l'authentification du document-valeur assurée par des éléments de sécurité classiques optiques, visuels et/ou tactiles intégrés au document-valeur tels que par exemple des filigranes, des hologrammes, des fils de sécurité, des impressions de données personnelles, etc.

Généralement, il est admis par des administrations émettrices de ces documents électroniques que les éléments de sécurité classiques restent légalement valables en cas de défaillance du dispositif RFID. Il en résulte que, dans ce cas, la sécurité repose uniquement sur les éléments de sécurité classiques.

Or, de tels éléments de sécurité sont assez aisément falsifiables. Le risque existe donc que le dispositif RFID soit volontairement mis hors service et les éléments de sécurité classiques portés par ces documents soient falsifiés.

En particulier, il est possible de rendre inopérant le microcircuit par simple exposition de ce dernier à un rayonnement micro-onde tel que par exemple celui émis à l'intérieur d'une cavité d'un micro-onde classique à usage ménager, pendant une durée prédéfinie. Ainsi, une exposition d'une durée de 3 à 5 secondes à une puissance comprise entre 850W à 1000W suffit à invalider le microcircuit. Le document-valeur, en revanche, n'est pas affecté par ce rayonnement micro-onde et garde une apparence non dégradée ce qui rend d'autant plus difficile la détection d'une telle falsification notamment par des agents de douane chargés de vérifier l'authenticité du document-valeur.

On connaît déjà de l'état de la technique, notamment du document FR 08/01589 déposée par la demanderesse, un système anti-falsification d'un document-valeur muni d'un microcircuit susceptible d'être rendu inopérant suite à une exposition à un rayonnement micro-onde d'une durée prédéfinie.
- Les documents EP 1277881 et WO 2008/047003 qui décrivent des documents sécurisés comportant des moyens révélateurs ou une substance active apte à modifier l'aspect de ces documents sous l'effet d'un rayonnement électromagnétique ;
- Le document US 2006/0202795 qui décrit un livre sécurisé dont la couverture comporte un composant activable sans contact ; et
- Le document WO 2009/110382 qui décrit une antenne dépolie présentant de bonnes performances de radiation à courte distance et à longue distance.

Le système comprend notamment une substance active apte à changer de couleur de façon irréversible par une réaction chimique déclenchée par exposition à un rayonnement micro-onde et un élément catalyseur apte à rendre la réaction chimique à l'origine du changement de couleur totale et effective. L'élément catalyseur permet ainsi d'accélérer la transformation de manière à ce que cette dernière ait lieu avant la destruction du microcircuit.

Cet élément catalyseur comprend par exemple une antenne linéaire accordée à un multiple ou un sous-multiple de la longueur d'onde du rayonnement micro-onde. Cette antenne linéaire est raccordée à l'une de ses extrémités à une charge terminale.

Ainsi, lors d'une exposition du document-valeur à un rayonnement micro-onde, l'antenne linéaire capte le rayonnement micro-onde et un courant induit circule dans l'antenne et alimente en courant la charge terminale. Cette dernière, en s'échauffant, permet la catalyse de la réaction chimique et accélère le changement de couleur de la substance active.

L'invention a notamment pour but de proposer un système de sécurisation de documents valeurs, permettant de détecter une fraude consistant principalement en la destruction d'un microcircuit dans un temps le plus court possible.

A cet effet, l'invention a notamment pour objet un système de sécurisation d'un document-valeur muni d'un microcircuit susceptible d'être rendu inopérant suite à une exposition à un rayonnement micro-onde de puissance et durée prédéfinies, dans lequel le système comprend un dispositif de révélation de l'exposition du microcircuit au rayonnement, ce dispositif comprenant des moyens sensibles à une élévation de température d'une zone prédéfinie du document-valeur et un circuit d'antenne comprenant un élément d'antenne sensiblement accordé au rayonnement micro-onde et une charge s'étendant au moins partiellement dans la zone prédéfinie, reliée à l'élément d'antenne et apte à s'échauffer lorsqu'elle est traversée par un courant, caractérisé en ce que l'élément d'antenne comprend une première partie d'antenne agencée pour capter essentiellement une composante électrique du rayonnement micro-onde et une deuxième partie d'antenne agencée pour capter essentiellement une composante magnétique de ce rayonnement.

De façon classique, l'espace autour d'une source rayonnante peut être divisée en deux régions : une région de champ proche et une région de champ lointain. L'exposition d'un objet est dite dans une région de champ proche lorsque la source est à une distance de l'objet sensiblement inférieure à la longueur d'onde et dans une région de champ lointain dans le cas contraire.

Plus précisément, le champ électromagnétique proche de la source ne répond pas aux mêmes lois que le champ lointain, situé à quelques dizaines de longueurs d'onde de cette source.

Dans la région de champ proche, les composantes électrique et magnétique du champ électromagnétique n'ont pas un comportement d'ondes planes et varient considérablement d'un point à l'autre. Dans cette région, l'énergie électromagnétique est maximale et le champ est principalement magnétique (la composante électrique est relativement faible). En revanche, dans la région de champ lointain, le rapport entre l'amplitude des composantes électrique et magnétique est une constante.

L'invention repose sur l'observation selon laquelle, dans un four micro-onde, il y a coexistence de ces deux régions.

En effet, un four micro-onde classique comprend une cavité fermée par une porte ainsi qu'un magnétron générant un rayonnement micro-onde à haute fréquence, à environ 2.45 GHz, formant la source du rayonnement micro-onde. Cette cavité forme généralement un résonateur à cavité multi-mode pour ce rayonnement. Les ondes électromagnétiques de ce rayonnement sont notamment réfléchies sur les parois de la cavité et interfèrent entre elles pour produire un phénomène d'ondes stationnaires.

Dans ce phénomène d'ondes stationnaires, un champ électrique s'établit en régime permanent. Du fait de la distance parcourue par réflexion des ondes sur les parois, on peut considérer que le champ électrique est dans le domaine du champ lointain. En revanche, à proximité du magnétron, on peut considérer en première approximation que le champ électromagnétique émis de façon isotrope est dans la région du champ proche.

On peut considérer que les dimensions de la cavité d'un four micro onde correspondent sensiblement au double de la longueur d'onde du rayonnement micro-onde et que quelle que soit la position de l'objet lors de son exposition au rayonnement, il est toujours à proximité du magnétron et en première approximation, on peut considérer qu'il est toujours dans les deux domaines proche et lointain.

Ainsi, la deuxième partie d'antenne, qui a un comportement essentiellement magnétique, est adaptée pour fonctionner dans le domaine du champ proche alors que la première partie d'antenne qui a un comportement essentiellement électrique est adaptée pour fonctionner dans le domaine du champ lointain. Cette double fonction de l'antenne permet d'optimiser la réception d'énergie électromagnétique fournie par le micro-onde.

De préférence, la première partie d'antenne est une antenne dipôle et la deuxième partie d'antenne est une antenne cadre magnétique. Une antenne dipôle comprend classiquement deux brins métalliques rectilignes alors que l'antenne cadre magnétique comprend par exemple au moins une spire en forme de boucle.

De préférence, l'antenne dipôle formant la première partie d'antenne a une longueur inférieure à la moitié de la longueur d'onde du rayonnement micro-onde.

Dans ce cas, l'antenne dipôle a principalement un comportement capacitif. L'association de l'antenne dipôle à comportement capacitif et de l'antenne cadre magnétique à comportement inductif permet d'optimiser le transfert d'énergie. Ainsi, pour certaines dimensions de ces deux types d'antennes, les effets capacitifs compensent exactement les effets inductifs. Cela permet de limiter les pertes d'énergie et d'en optimiser le transfert vers la charge.

En outre, comme la dimension de l'antenne dipôle est inférieure à la moitié de la longueur d'onde du rayonnement micro-onde, les dimensions du circuit d'antenne peuvent être réduites et il est ainsi plus aisé de l'incorporer à l'intérieur d'un document valeur de format standard.

Un système selon l'invention peut en outre comporter l'une ou plusieurs des caractéristiques selon lesquelles :
- la deuxième partie d'antenne comprend une pluralité de spires électriquement conductrices ;
- l'antenne dipôle a une longueur inférieure à la moitié de la longueur d'onde du rayonnement micro-onde ;
- la première partie d'antenne comprend deux branches électriquement conductrices séparées par un diélectrique ;
- le circuit d'antenne comprend une interface de couplage mutuel des première et deuxième parties ;
- l'interface de couplage comprend un élément électriquement conducteur, relié à la première partie d'antenne, apte à entourer au moins partiellement la deuxième partie d'antenne ;
- l'élément d'antenne est réalisé par sérigraphie avec une encre électriquement conductrice ;
- les moyens sensibles sont agencés pour subir une transformation détectable sous l'effet d'une élévation de la température ;
- les moyens sensibles comprennent une substance apte à passer de manière visible et irréversible d'un premier état stable à un second état stable par réaction chimique déclenchée par un rayonnement micro-onde, cette réaction étant susceptible d'être rendue effective et totale par élévation de la température ;
- la substance est apte à changer de couleur ;
- la deuxième partie d'antenne est reliée à la charge ;
- les première et deuxième parties d'antenne sont dimensionnées pour réaliser une adaptation d'impédance ;
- le microcircuit est susceptible d'être rendu inopérant par exposition à un rayonnement micro-onde d'une puissance prédéfinie supérieure à 50W et d'une durée prédéfinie comprise entre 0.1 et 10 secondes.

En outre, l'invention a également pour objet un document-valeur muni d'un microcircuit susceptible d'être rendu inopérant suite à une exposition à un rayonnement micro-onde de durée et de puissance prédéfinies, caractérisé en ce qu'il comprend un système selon l'invention.

Un document-valeur selon l'invention peut en outre comporter l'une ou plusieurs des caractéristiques selon lesquelles :
- le document comprend une antenne de communication en champ proche relié au microcircuit, le microcircuit comprenant des moyens de stockage d'informations relatives au document accessibles via la communication en champ proche ;
- le document se présente sous la forme d'un livret comprenant une pluralité de pages et le système est incorporé dans une page du document-valeur.

D'autres caractéristiques et avantages de l'invention apparaîtront à la lumière de la description qui suit, faite en référence aux dessins annexés dans lesquels :
- la figure 1 représente un document-valeur, en particulier un passeport, comprenant un système de sécurisation selon l'invention ;
- la figure 2 représente la feuille du passeport de la figure 1 incorporant le système de sécurisation (non visible sur cette figure) ;
- la figure 3 représente une vue par transparence des éléments électroniques portés par la feuille de la figure 2 comprenant notamment le système de sécurisation ;
- la figure 4 représente en détail un circuit d'antenne du système de sécurisation représenté sur la figure 3 ;
- la figure 5 est une vue en coupe transversale de la page du passeport de la figure 3 selon la ligne 5-5 ;

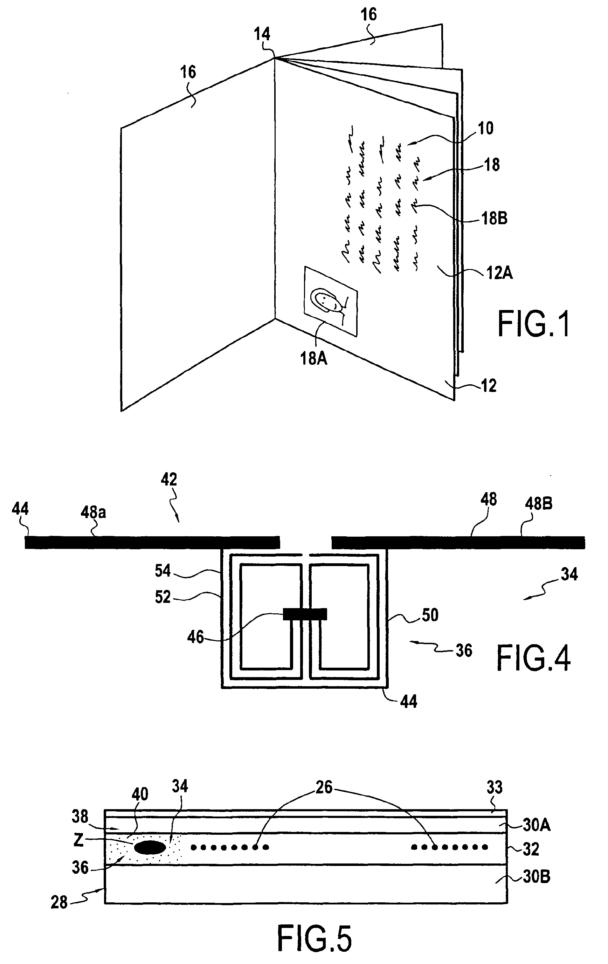

On a représenté sur **la** **figure 1** un document de sécurité, ou document-valeur, désigné par la référence générale 10. Dans l'exemple illustré, le document 10 est un passeport. En variante, le document-valeur peut être une carte d'identité, un permis de conduire, etc.

Le passeport 10 comprend de façon classique une pluralité de feuilles 12 reliées entre elles le long d'une ligne de reliure 14 pour former un livret.

Dans cet exemple, le passeport 10 comprend en outre une couverture rigide 16 protégeant les feuilles 12 plus souples. Cette couverture rigide 16 permet notamment de protéger les feuilles internes du livret d'une dégradation liée à sa manipulation ou à l'environnement du passeport 10 et confère un aspect esthétique au passeport 10.

De préférence, au moins une des feuilles 12A du livret porte des données 18. Par exemple, les données 18 comprennent une photographie 18A du détenteur du passeport 10 et des informations 18B relatives à son identité, telles que sa date de naissance, son adresse, etc. La feuille 12A du passeport 10 peut porter également des éléments de sécurité tels que des filigranes et/ou des hologrammes, etc (non représentés).

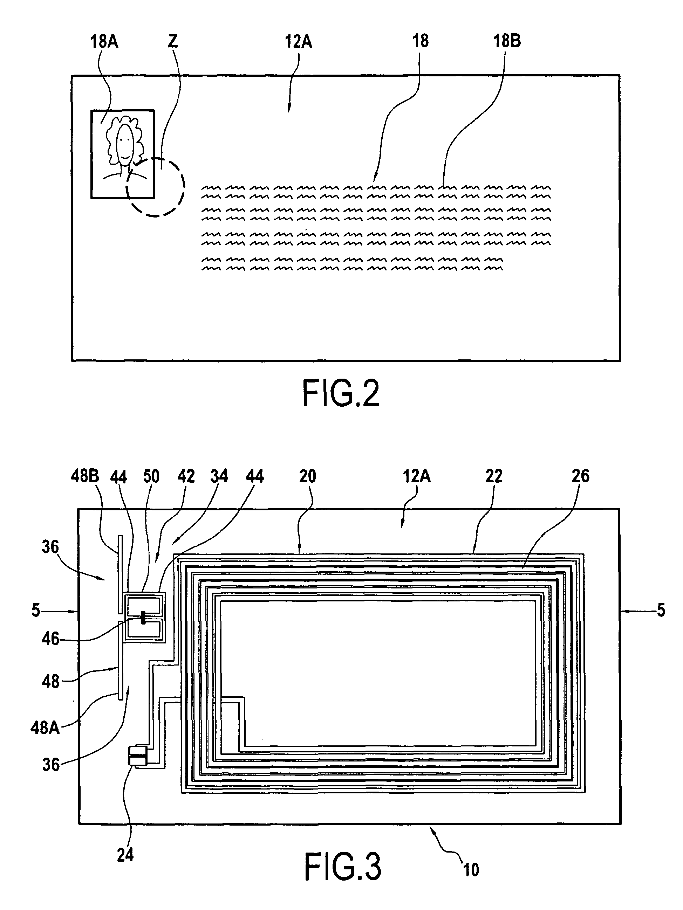

De préférence, la feuille 12A incorpore par exemple un élément de sécurité 20 électronique. Dans cet exemple, l'élément de sécurité 20 comprend un circuit électronique 22 composé d'une puce électronique 24, dite également microcircuit, raccordée à une antenne 26 de communication en champ proche. Un tel élément de sécurité 20 est représenté par exemple par transparence sur **la** **figure 3****.**

Dans cet exemple, le microcircuit 24 comprend des moyens de stockage d'informations relatives au document accessibles via la communication en champ proche.

La puce 24 est dans ce cas alimentée par l'énergie produite lors du couplage électromagnétique entre l'antenne d'un lecteur externe (non représenté sur les figures) et l'antenne 26 du passeport 10. La puce 24 permet de mémoriser de manière sécurisée des informations relatives au détenteur du passeport 10. Des informations liées à l'identité du détendeur du passeport 10 sont ainsi destinées à être échangées entre le lecteur et le passeport 10 muni d'un tel circuit électronique 22.

L'incorporation de l'élément de sécurité 20 dans le passeport 10 permet ainsi de rendre plus difficile les tentatives de falsification du passeport par un fraudeur du fait que le retrait de l'antenne 26 provoque la destruction de la feuille laminée 12A.

En outre, l'élément de sécurité 20 est apte à échanger des données avec le lecteur externe par exemple à une fréquence de 13.56 MHz, définie par la norme ISO 14 443.

Dans l'exemple illustré sur **la** **figure 5****,** on voit que la feuille 12A comprend un support formé par un ensemble laminé 28 de couches réalisées dans des matériaux divers, tels que par exemple des matières plastiques (PVC, PE, PET, PC). En variante, la feuille 12A est réalisée en papier.

Comme cela est illustré sur **la** **figure 5****,** cet ensemble laminé 28 comprend au moins deux couches externes 30A, 30B et une couche interne 32 intercalée entre les deux couches externes 30A, 30B. L'élément de sécurité 20 est ainsi disposé entre les couches de manière à être optiquement dissimulé dans la feuille 12A.

Afin de protéger les données 18, la feuille 12A comprend en outre une couche transparente 33 de protection des données 18.

De préférence, les données 18 sont imprimées au moyen d'un faisceau laser. Dans ce cas, de préférence, la couche transparente 33 est réalisée dans un matériau marquable au laser. Ainsi, par exemple, la couche transparente 33 est réalisée dans un matériau qui comprend essentiellement du polyéthylène téréphtalate glycol et du polycarbonate. En effet, de façon connue en soi, le polycarbonate noircit lors de son irradiation par un faisceau laser.

De façon connue en soi, le microcircuit 24 est susceptible d'être rendu inopérant suite à une exposition à un rayonnement micro-onde de puissance et durée prédéfinies.

Par exemple, le rayonnement micro-onde permettant de mettre hors d'usage le microcircuit 24 pour une puissance prédéfinie supérieure à 50W, de préférence comprise entre 850W et 1500W et pour une durée prédéfinie comprise entre 0.1 et 10 secondes. Grâce au rayonnement micro-onde, il est possible de dégrader l'élément électronique de sécurité 20 sans que cela ne soit visible de l'extérieur car le circuit électronique 22 est optiquement dissimulé dans la feuille 12A et que le rayonnement micro-onde ne provoque pas de dégradations apparentes du passeport 10. Dans ce cas, une falsification du document valeur 10, notamment des données 18, est facilitée.

Afin de protéger le document d'une telle falsification, le passeport 10 comprend plus particulièrement un système de sécurisation 34 selon l'invention. Ce système de sécurisation est de préférence incorporé dans la feuille 12A du passeport 10 et est représenté en détail sur **la** **figure 4****.**

Afin de mettre en évidence une dégradation du microcircuit 24, le système 34 comprend en outre un dispositif 36 de révélation de l'exposition du microcircuit 24 au rayonnement.

Plus précisément, ce dispositif 36 comprend des moyens sensibles 38 à une élévation de température d'une zone prédéfinie Z du document-valeur 10.

De préférence, les moyens sensibles 38 sont agencés pour subir une transformation détectable sous l'effet d'une élévation de température.

Dans l'exemple décrit, les moyens sensibles 38 comprennent une substance 40 apte à passer de manière visible et irréversible d'un premier état stable à un second état stable par réaction chimique déclenchée par un rayonnement micro-onde, cette réaction étant susceptible d'être rendue effective et totale par élévation de la température.

Cette substance 40 est par exemple incorporée à un support de base de la feuille 12A du passeport 10. Dans cet exemple, le support de base de la feuille 12A comprend plusieurs couches 30A, 30B, 32, 33 réalisées en matière plastique et laminées entre elles. Par exemple, la substance active 40 est incorporée au matériau de l'une ou de plusieurs des couches 30A, 30B, 32, 33 de la feuille 12A.

En variante, le support de base du document-valeur, notamment dans le cas du passeport 10, peut comprendre du papier.

Le support de base dépend notamment de la nature du document-valeur. Ainsi, dans le cas d'une carte d'identité ou encore d'un permis de conduire, la substance active 40 peut être incorporée dans le document-valeur 10 de différentes façons.

Dans une autre variante, la substance active peut être incorporée à un vernis recouvrant le document-valeur 10, par exemple un vernis de surimpression déposé sur le document à sécuriser.

Dans une autre variante, la substance active 40 peut être incorporée à une encre imprimée sur le document-valeur 10, l'impression pouvant être réalisée par diverses techniques, telles que l'offset, la sérigraphie, la flexographie, l'héliogravure, la typographie, le jet d'encre. En outre, par exemple, la substance active 40 peut être incorporée au document 10 par impression taille-douce afin de former un motif perceptible après une exposition du document au rayonnement micro-onde.

Dans une autre variante, la substance active 40 peut être incorporée dans un adhésif de protection ou un film de protection laminable sur le document-valeur 10.

Une telle substance 40 est par exemple connue des demandes de brevet WO 2006/042967 et FR 2 907 137. Il a été ainsi observé que la durée de transformation d'une telle substance exposée au rayonnement micro-onde, pour une puissance comprise entre 850 et 1000W est supérieure à la dizaine de secondes voire proche de la minute dans certains cas. Il a été en outre mis en évidence que la vitesse de transformation chimique du premier état au deuxième état de la substance active 40 était accélérée par apport de chaleur.

Par exemple, la substance 40 est apte à changer de couleur lors de sa transformation. Ainsi, dans le cas d'un échauffement dans une zone Z localisée de la feuille 12A du passeport 10, un changement de couleur de la substance est observé dans cette même zone Z. En outre, la substance active 40 est par exemple initialement incolore ou faiblement colorée et donc imperceptible lorsqu'elle est dans son premier état.

De plus, comme cela est illustré par la figure 4, le dispositif 36 comprend un circuit d'antenne 42 comprenant un élément d'antenne 44 accordé à un multiple ou à un sous-multiple de la longueur d'onde du rayonnement micro-onde et relié à une charge 46 s'étendant au moins partiellement dans la zone prédéfinie Z. Cette charge 46 est apte à s'échauffer lorsqu'elle est traversée par un courant. De préférence, la charge 46 comprend un élément résistif.

Dans cet exemple, l'élément d'antenne 44 est incorporé dans la couche centrale 32 de la feuille 12A.

En particulier, l'élément d'antenne 44 comprend une première partie d'antenne 48 agencée pour capter essentiellement une composante électrique du rayonnement micro-onde et une deuxième partie d'antenne 50 agencée pour capter essentiellement une composante magnétique de ce rayonnement.

De préférence, la première partie d'antenne 48 est une antenne dipôle et la deuxième partie d'antenne 50 est une antenne cadre magnétique.

Cette deuxième partie d'antenne 50 comprend par exemple une pluralité de spires électriquement conductrices. De préférence, la première partie d'antenne 48 comprend deux brins électriquement conducteurs 48A, 48B séparés par un diélectrique, tel que par exemple de l'air.

De préférence, afin d'amplifier le comportement capacitif de l'antenne dipôle 48, la longueur totale de cette dernière est inférieure à la moitié de la longueur d'onde du rayonnement micro-onde. Pour une fréquence de 2.45 GHz, la longueur d'onde est égale à environ 12 centimètres.

Dans l'exemple illustré, chaque brin électriquement conducteur 48A, 48B a une longueur d'environ 14 mm et les deux brins 48A, 48B séparés par le diélectrique ont une longueur ensemble d'environ 30 millimètres, ce qui représente sensiblement le quart de la longueur d'onde du rayonnement micro-onde.

L'ajout d'une antenne cadre de comportement principalement inductif au circuit d'antenne permet notamment de compenser le comportement principalement capacitif de l'antenne dipôle.

Les spires électriquement conductrices de la deuxième partie d'antenne 50 s'étendent par exemple à l'intérieur d'un contour de forme générale rectangulaire. Le contour de la deuxième partie 50 a une longueur d'environ 9 millimètres et une largeur d'environ 8 millimètres. En outre, l'interstice entre chaque spire est de l'ordre d'environ 0.25 millimètre.

En outre, dans un mode de réalisation préféré de l'invention, le circuit d'antenne 42 comprend une interface 52 de couplage mutuel des première 48 et deuxième 50 parties.

Par exemple, comme cela est illustré en détail sur **la** **figure 4****,** l'interface de couplage 52 comprend un élément électriquement conducteur 54, relié à la première partie d'antenne 48, apte à entourer au moins partiellement la deuxième partie d'antenne 50.

Par exemple, l'élément d'antenne 44 est réalisé par sérigraphie avec une encre électriquement conductrice.

Dans l'exemple illustré sur les figures, la deuxième partie d'antenne 50 est raccordée électriquement à la charge terminale 46. Toutefois, en variante, la charge terminale 46 peut être raccordée à la première partie d'antenne 48.

De préférence, afin d'optimiser l'intensité du courant circulant dans les première 48 et deuxième 50 parties d'antenne, ces dernières sont dimensionnées pour réaliser une adaptation d'impédance, ceci afin de maximiser le transfert d'énergie électromagnétique vers la charge terminale 46.

On va maintenant décrire les principaux aspects du fonctionnement d'un système de sécurisation selon l'invention.

Dans un premier temps, le passeport 10 est par exemple placé dans l'enceinte d'un four micro-onde puis est exposé à un rayonnement micro-onde à une puissance de 1000W pendant une durée inférieure à 5 secondes.

Au cours de cette exposition, le microcircuit 24 est détruit. En outre, du fait de la coexistence des deux régions de champ proche et de champ lointain dans l'enceinte, la première partie d'antenne 48 capte essentiellement la composante électrique des ondes stationnaires établies dans l'enceinte alors que la deuxième partie d'antenne 50 capte essentiellement la composante magnétique des ondes émises à proximité du magnétron formant la source du rayonnement micro-onde.

L'énergie électromagnétique transférée au circuit d'antenne 42 est alors optimisée de façon simple et efficace. Un courant est alors induit dans le circuit d'antenne 42 qui permet l'alimentation de la charge terminale 46.

Dans le mode de réalisation décrit précédemment, l'énergie captée par la première partie d'antenne 48 est transférée à la deuxième partie d'antenne 50, raccordée électriquement à la charge 46, au moyen de l'interface de couplage mutuel. Toutefois, en variante, les deux parties d'antenne 48 et 50 peuvent être directement raccordées entre elles par un élément physique tel qu'un élément électriquement conducteur. En outre, dans une autre variante, la charge terminale 46 peut être raccordée à la première partie d'antenne 48.

La charge terminale 46 ainsi alimentée en courant, va s'échauffer par effet joule. Cela va avoir pour effet de provoquer un échauffement local de la feuille 12A et notamment de la couche ou des couches 30A, 30B, 32, 33 incorporant la substance active 40 dans la zone Z à l'intérieur de laquelle s'étend au moins partiellement la charge 46.

Cette substance active 40, soumise au rayonnement micro-onde, se transforme chimiquement sous l'effet du rayonnement micro-onde, et l'échauffement local provoqué par la charge 46 va avoir pour effet d'accélérer cette transformation chimique, par exemple par catalyse chimique.

Grâce à cette catalyse, le changement de couleur de la substance active 40 est effectif avant même que le microcircuit 24 ne soit rendu totalement inopérant.

Il est bien entendu que les modes de réalisation qui viennent d'être décrits ne présentent aucun caractère limitatif et qu'ils pourront recevoir toute modification désirable sans sortir pour cela du cadre de l'invention. En particulier, l'interface de couplage est optionnelle. Il serait ainsi conforme à l'invention de raccorder directement entre elles les deux parties d'antenne. D'autres formes d'antenne peuvent convenir pour les deux parties du circuit d'antenne dès lors que l'une des parties ait un comportement essentiellement capacitif et l'autre des parties ait un comportement essentiellement inductif.

La feuille 12A peut ou non porter des données imprimées. La feuille peut par exemple uniquement comporter des éléments de sécurité incorporés dans son corps, tels que l'élément de sécurité électronique 20 ainsi que le système de sécurisation 34.

En outre, d'autres moyens sensibles à la température peuvent convenir dès lors que les moyens soient aptes à se transformer sous l'effet d'une élévation de température.

## Revendications

1. Système (34) de sécurisation d'un document-valeur (10) muni d'un microcircuit (24) susceptible d'être rendu inopérant suite à une exposition à un rayonnement micro-onde de puissance et durée prédéfinies, dans lequel le système (34) comprend un dispositif (36) de révélation de l'exposition du microcircuit (24) au rayonnement, ce dispositif (36) comprenant des moyens sensibles (38) à une élévation de température d'une zone prédéfinie (Z) du document-valeur (10) et un circuit d'antenne (42) comprenant un élément d'antenne (44) accordé sensiblement au rayonnement micro-onde et une charge (46) s'étendant au moins partiellement dans la zone prédéfinie (Z), reliée à l'élément d'antenne (44) et apte à s'échauffer lorsqu'elle est traversée par un courant, **caractérisé en ce que** l'élément d'antenne (44) comprend une première partie d'antenne (48) agencée pour capter essentiellement une composante électrique du rayonnement micro-onde et une deuxième partie d'antenne (50) agencée pour capter essentiellement une composante magnétique de ce rayonnement.

2. Système (34) selon la revendication précédente, dans lequel la première partie d'antenne (48) est une antenne dipôle et la deuxième partie d'antenne (50) est une antenne cadre magnétique.

3. Système (34) selon la revendication précédente, dans lequel la deuxième partie d'antenne (50) comprend une pluralité de spires électriquement conductrices.

4. Système selon la revendication 2 ou 3, dans lequel l'antenne dipôle a une longueur inférieure à la moitié de la longueur d'onde du rayonnement micro-onde.

5. Système (34) selon l'une quelconque des revendications précédentes, dans lequel la première partie d'antenne (48) comprend deux branches électriquement conductrices (48A, 48B) séparées par un diélectrique.

6. Système (34) selon l'une quelconque des revendications précédentes, dans lequel le circuit d'antenne (42) comprend une interface (52) de couplage mutuel des première (48) et deuxième (50) parties.

7. Système (34) selon la revendication précédente, dans lequel l'interface de couplage (52) comprend un élément électriquement conducteur (54), relié à la première partie d'antenne (48), apte à entourer au moins partiellement la deuxième partie d'antenne (50).

8. Système (34) selon l'une quelconque des revendications précédentes, dans lequel l'élément d'antenne (44) est réalisé par sérigraphie avec une encre électriquement conductrice.

9. Système (34) selon l'une quelconque des revendications précédentes, dans lequel les moyens sensibles (38) sont agencés pour subir une transformation détectable sous l'effet d'une élévation de température.

10. Système (34) selon l'une quelconque des revendications précédentes, dans lequel les moyens sensibles (38) comprennent une substance (40) apte à passer de manière visible et irréversible d'un premier état stable à un second état stable par réaction chimique déclenchée par un rayonnement micro-onde, cette réaction étant susceptible d'être rendue effective et totale par élévation de la température.

11. Système (34) selon la revendication précédente, dans lequel la substance (40) est apte à changer de couleur.

12. Système (34) selon l'une quelconque des revendications précédentes, dans lequel la deuxième partie d'antenne (50) est reliée à la charge (46).

13. Système (34) selon l'une quelconque des revendications précédentes, dans lequel les première (48) et deuxième (50) parties d'antenne sont dimensionnées pour réaliser une adaptation d'impédance.

14. Système (34) selon l'une quelconque des revendications précédentes, dans lequel le microcircuit (24) est susceptible d'être rendu inopérant par exposition à un rayonnement micro-onde d'une puissance prédéfinie supérieure à 50W et d'une durée prédéfinie comprise entre 0.1 et 10 secondes.

15. Document-valeur (10) muni d'un microcircuit (24) susceptible d'être rendu inopérant suite à une exposition à un rayonnement micro-onde de durée et de puissance prédéfinies, **caractérisé en ce qu'**il comprend un système (34) selon l'une quelconque des revendications précédentes.

16. Document-valeur (10) selon la revendication précédente, comprenant une antenne de communication en champ proche (26) relié au microcircuit (24), le microcircuit (24) comprenant des moyens de stockage d'informations relatives au document accessibles via la communication en champ proche.

17. Document-valeur (10) selon la revendication 15 ou 16, se présentant sous la forme d'un livret comprenant une pluralité de pages, dans lequel le système (34) est incorporé dans une feuille (12A) du document-valeur (10).

## Claims

1. A system (34) for securing a document of value (10) provided with a microcircuit (24) capable of being made inoperative as a result of exposure to microwave radiation of predefined power and duration, wherein the system (34) comprises a device (36) for revealing the exposure of the microcircuit (24) to the radiation, the device (36) comprising sensitive means (38) that are sensitive to a rise in temperature of a predefined zone (Z) of the document of value (10), and an antenna circuit (42) comprising an antenna element (44) tuned substantially to the microwave radiation and a load (46) extending at least in part in the predefined zone (Z), the load being connected to the antenna (44) and being suitable for being heated when a current passes therethrough, the system being **characterized in that** the antenna element (44) comprises a first antenna portion (48) arranged to pick up essentially an electric component of the microwave radiation, and a second antenna portion (50) arranged to pick up essentially a magnetic component of the radiation.

2. A system (34) according to the preceding claim, wherein the first antenna portion (48) is a dipole antenna and the second antenna portion (50) is a magnetic loop antenna.

3. A system (34) according to the preceding claim, wherein the second antenna portion (50) comprises a plurality of electrically conductive turns.

4. A system according to claim 2 or claim 3, wherein the dipole antenna is of a length that is less than half the wavelength of the microwave radiation.

5. A system (34) according to any preceding claim, wherein the first antenna portion (48) comprises two electrically-conductive branches (48A, 48B) separated by a dielectric.

6. A system (34) according to any preceding claim, wherein the antenna circuit (42) includes a coupling interface (52) for mutual coupling between the first and second portions (48, 50).

7. A system (34) according to the preceding claim, wherein the coupling interface (52) comprises an electrically-conductive element (54) connected to the first antenna portion (48) and suitable for surrounding at least part of the second antenna portion (50).

8. A system (34) according to any preceding claim, wherein the antenna element (44) is made by silk-screen printing using an electrically-conductive ink.

9. A system (34) according to any preceding claim, wherein the sensitive means (38) are arranged to be subjected to a transformation that is detectable under the effect of a temperature rise.

10. A system (34) according to any preceding claim, wherein the sensitive means (38) comprise a substance (40) that is suitable for passing in visible and irreversible manner from a first stable state to a second stable state by a chemical reaction that is triggered by microwave radiation, said reaction being suitable for being made effective and total by a rise in temperature.

11. A system (34) according to the preceding claim, wherein the substance (40) is suitable for changing color.

12. A system (34) according to any preceding claim, wherein the second antenna portion (50) is connected to the load (46).

13. A system (34) according to any preceding claim, wherein the first and second antenna portions (48, 50) are dimensioned to provide impedance matching.

14. A system (34) according to any preceding claim, wherein the microcircuit (24) is suitable for being made inoperative by exposure to microwave radiation at a predefined power greater than 50 W and of a predefined duration lying in the range 0.1 seconds to 10 seconds.

15. A document of value (10) provided with a microcircuit (24) suitable for being made inoperative as a result of exposure to microwave radiation of predefined duration and power, the document of value being **characterized in that** it includes a system (34) according to any preceding claim.

16. A document of value (10) according to the preceding claim, including a near-field communications antenna (26) connected to the microcircuit (24), the microcircuit (24) including means for storing information relating to the document and accessible via near-field communication.

17. A document of value (10) according to claim 15 or claim 16, the document being in the form of a booklet having a plurality of pages, wherein the system (34) is incorporated in a sheet (12A) of the document of value (10).

## Patentansprüche

1. System (34) zur Sicherung eines Wertdokuments (10), das mit einer Mikroschaltung (24) versehen ist, die infolge einer Mikrowellenstrahlungsexposition mit vordefinierter Leistung und Dauer unwirksam gemacht werden kann, wobei das System (34) eine Vorrichtung (36) zum Aufdecken der Strahlungsexposition der Mikroschaltung (24) umfaßt, wobei diese Vorrichtung (36) Mittel (38), die gegenüber einer Temperaturerhöhung eines vordefinierten Bereichs (Z) des Wertdokuments (10) empfindlich sind, sowie eine Antennenschaltung (42) umfaßt, welche ein im wesentlichen auf die Mikrowellenstrahlung abgestimmtes Antennenelement (44) und eine wenigstens teilweise in dem vordefinierten Bereich (Z) verlaufende Last (46) umfaßt, die mit dem Antennenelement (44) verbunden und geeignet ist, sich zu erhitzen, wenn sie von einem Strom durchflossen wird, **dadurch gekennzeichnet, daß** das Antennenelement (44) einen ersten Antennenteil (48), der angeordnet ist, um im wesentlichen eine elektrische Komponente der Mikrowellenstrahlung zu erfassen, sowie einen zweiten Antennenteil (50) umfaßt, der angeordnet ist, um im wesentlichen eine magnetische Komponente dieser Strahlung zu erfassen.

2. System (34) nach dem vorhergehenden Anspruch, wobei der erste Antennenteil (48) eine Dipolantenne und der zweite Antennenteil (50) eine Magnetrahmenantenne ist.

3. System (34) nach dem vorhergehenden Anspruch, wobei der zweite Antennenteil (50) eine Vielzahl von elektrisch leitenden Windungen umfaßt.

4. System nach Anspruch 2 oder 3, wobei die Dipolantenne eine Länge aufweist, die kleiner als die Hälfte der Wellenlänge der Mikrowellenstrahlung ist.

5. System (34) nach einem der vorhergehenden Ansprüche, wobei der erste Antennenteil (48) zwei durch ein Dielektrikum voneinander getrennte elektrisch leitende Schenkel (48A, 48B) umfaßt.

6. System (34) nach einem der vorhergehenden Ansprüche, wobei die Antennenschaltung (42) eine Schnittstelle (52) zum gegenseitigen Koppeln des ersten Teils (48) und des zweiten Teils (50) umfaßt.

7. System (34) nach dem vorhergehenden Anspruch, wobei die Kopplungsschnittstelle (52) ein mit dem ersten Antennenteil (48) verbundenes elektrisch leitendes Element (54) umfaßt, das geeignet ist, den zweiten Antennenteil (50) wenigstens teilweise zu umgeben.

8. System (34) nach einem der vorhergehenden Ansprüche, wobei das Antennenelement (44) mittels Siebdruck mit einer elektrisch leitenden Druckfarbe hergestellt ist.

9. System (34) nach einem der vorhergehenden Ansprüche, wobei die empfindlichen Mittel (38) angeordnet sind, um unter der Wirkung einer Temperaturerhöhung eine erfaßbare Umwandlung zu erfahren.

10. System (34) nach einem der vorhergehenden Ansprüche, wobei die empfindlichen Mittel (38) eine Substanz (40) umfassen, die geeignet ist, durch chemische Reaktion, ausgelöst durch eine Mikrowellenstrahlung, sichtbar und unumkehrbar von einem ersten stabilen Zustand in einen zweiten stabilen Zustand überzugehen, wobei diese Reaktion durch Erhöhung der Temperatur wirksam und vollständig gemacht werden kann.

11. System (34) nach dem vorhergehenden Anspruch, wobei die Substanz (40) geeignet ist, die Farbe zu ändern.

12. System (34) nach einem der vorhergehenden Ansprüche, wobei der zweite Antennenteil (50) mit der Last (46) verbunden ist.

13. System (34) nach einem der vorhergehenden Ansprüche, wobei der erste Antennenteil (48) und der zweite Antennenteil (50) dimensioniert sind, um eine Impedanzanpassung zu bewirken.

14. System (34) nach einem der vorhergehenden Ansprüche, wobei die Mikroschaltung (24) **dadurch**, daß sie einer Mikrowellenstrahlung mit einer vordefinierten Leistung von über 50 W und für eine vordefinierte Dauer von 0,1 bis 10 Sekunden ausgesetzt wird, unwirksam gemacht werden kann.

15. Wertdokument (10), das mit einer Mikroschaltung (24) versehen ist, die infolge einer Mikrowellenstrahlungsexposition mit vordefinierter Dauer und Leistung unwirksam gemacht werden kann, **dadurch gekennzeichnet, daß** es ein System (34) nach einem der vorhergehenden Ansprüche umfaßt.

16. Wertdokument (10) nach dem vorhergehenden Anspruch, das eine Nahfeldkommunikationsantenne (26) umfaßt, die mit der Mikroschaltung (24) verbunden ist, wobei die Mikroschaltung (24) Mittel zur Speicherung von Informationen bezüglich des Dokuments umfaßt, die über die Nahfeldkommunikation zugänglich sind.

17. Wertdokument (10) nach Anspruch 15 oder 16, das in Form eines Büchleins mit einer Vielzahl von Seiten vorliegt, wobei das System (34) in ein Blatt (12A) des Wertdokuments (10) integriert ist.
